Europäisches Patentamt

(19) European Patent Office

Office européen des brevets

(11) Publication number: **0 015 333**
**B1**

(12) **EUROPEAN PATENT SPECIFICATION**

(45) Date of publication of patent specification: **17.11.82**

(51) Int. Cl.³: **C 01 F 11/10, C 01 B 3/32, C 10 G 25/08, C 10 K 1/30**

(21) Application number: **79300358.3**

(22) Date of filing: **08.03.79**

(54) Converting calcium sulphide to calcium oxide.

(43) Date of publication of application:
**17.09.80 Bulletin 80/19**

(45) Publication of the grant of the patent:
**17.11.82 Bulletin 82/46**

(84) Designated Contracting States:
**BE DE FR NL**

(56) References cited:
EP - A - 0 013 590
DE - C - 392 280
GB - A - 1 183 937
GB - A - 1 280 374
GB - A - 1 336 563
GB - A - 1 384 711
GB - A - 1 447 475

(73) Proprietor: **Exxon Research and Engineering Company**
**P.O.Box 390 180 Park Avenue**
**Florham Park New Jersey 07932 (US)**

(72) Inventor: **Moss, Gerald**
**"Trevose" Sarajac Avenue East Challow**
**Wantage Oxfordshire (GB)**

(74) Representative: **Somers, Harold Arnold et al,**
**ESSO Engineering (Europe) Ltd. Patents & Licences Apex Tower High Street**
**New Malden Surrey KT3 4DJ (GB)**

## Converting calcium sulphide to calcium oxide

The present invention relates to converting calcium sulphide (CaS) to calcium oxide (CaO), and was made in the course of work performed under a Contract with the U.S. Environmental Protection Agency.

CaS is produced, inter alia, during the desulphurization of fuels and gases containing sulphur compounds which react with CaO or thermal precursors thereof, such as $CaCO_3$ or mixed carbonates such as dolomite (approximately $MgCO_3CaCO_3$). In order to avoid a major disposal problem, it has been proposed to convert the CaS back to CaO for re-use in desulphurization. This may be done by exposing the CaS to an oxygen-containing gas (e.g. air). In this specification, references to "air" include references to other oxygen-containing gases unless the context states or implies otherwise. Preferably the CaS-containing material is in the form of particles which are fluidized by the oxygen-containing gas.

If the air rate is low relative to the rate at which CaS is provided or made available for conversion, not all the CaS is converted and the overall sulphur content of the particles undergoing conversion tends to increase. The CaS which is converted, however, is almost wholly converted to CaO, rather than $CaSO_4$, and the sulphur is liberated as sulphur oxides, predominantly $SO_2$. As a result, if the particles are employed in a cyclic process in which, in the other part of the cycle, the treated particles are employed for desulphurization, there will be a build-up in the sulphur content of the circulating particles which will influence the efficacy of the particles for fixing sulphur in the desulphurizing stage. In most instances, an equilibrium will be attained at a relatively high circulating sulphur content in which the amount of sulphur fixed during desulphurization will be balanced by the amount of sulphur released as oxides in the conversion stage.

If the air rate is high relative to the rate at which CaS is provided or made available for conversion, an increased proportion of the CaS is converted to $CaSO_4$, less $SO_2$ being liberated and less CaO formed, i.e. the selectivity of conversion to CaO is reduced. An equilibrium sulphur content is established at a lower overall level than in the case wherein the air rate is relatively low. In both cases, the conversion temperature is influenced by the rate of input to, and removal of particles from, the conversion bed since the particles act as a heat transfer agent.

The present invention provides a method of converting calcium sulphide contained in particles to calcium oxide, comprising passing the particles into a conversion bed operated at an elevated temperature, the conversion bed being fluidized by passing a free oxygen-containing gas into the bottom thereof, and in which the particles are passed via an entrance into a first region of the conversion bed adjoining the said entrance and wherein at least some of the CaS is converted to CaO with the liberation of at least one sulphur oxide, recovering particles of increased CaO content via an exit receiving particles from a second region of the conversion bed adjoining the said exit, particles passing from the said entrance to the said exit passing along a path which extends through both the first and second regions thereof, characterized in that the said entrance and the said exit are separated in a horizontal sense and in that a reducing agent is passed into the second region of the conversion bed to remove by chemical reaction any excess oxygen which might otherwise oxidize any unconverted CaS to $CaSO_4$.

Preferably the said entrance is so arranged that particles enter a lower part of the first region (e.g. at or near the bottom thereof) and the exit is so arranged that particles leave an upper part of the second region (e.g. at or near the top thereof). The said entrance and exit are preferably substantially at opposite ends of the conversion bed. The entrance and exit may be on the same side of the conversion bed, but separated from each other by a vertical baffle which extends partly towards the opposite side of the bed so that particles passing from the entrance to the exit circulate along a path which is substantially U-shaped as viewed from above the conversion bed (i.e. substantially U-shaped in plan).

The reducing agent is passed into the second region preferably in an amount such that the oxygen of the oxygen-containing gas passing into the second region will provide about 55% of the requirement for complete oxidation of the reducing agent.

The reducing agent may be a liquid, solid or gas, and in the instance where the CaS is produced in the desulphurizing of a sulphur-containing fuel, it may be convenient to use some of the sulphur-containing fuel as the reducing agent. The free oxygen-containing gas may be air.

The provision of the reducing agent in the second region of the conversion bed increases the selectivity of converion of CaS to CaO, and the yield of liberated sulphur and sulphur compounds (i.e. sulphur oxide(s)) is correspondingly increased while the proportion of $CaSO_4$ is reduced in the particles leaving the conversion bed. The formation of $CaSO_4$ from CaS is highly exothermic and tends to raise temperatures, particularly in the second region, while the provision of the reducing agent in the second region tends to reduce temperatures in the second region of the conversion bed and make them more uniform in the conversion bed as a whole.

When CaO is employed to desulphurize sulphur-containing fuels, the fuels are preferably injected into a bed of particles comprising CaO maintained at a fuel gasification temperature which is preferably in the range of from 800 to 1100°C, the particles being fluidized by a free oxygen-containing gas, e.g. air (e.g. at a stoichiometric rate of 15% to 30% relative to the fuel) for gasifying the fuel. Particles containing CaS are passed into the conversion bed, and treated as above described, and the treated particles are returned to the fuel desulphurization bed. The temperature in the conversion bed will tend to be higher (e.g. 1050 to 1090°C, preferably 1060—1080°C) than the more preferred range of temperatures (850—880°C) in the fuel desulphurization bed. Thus, the particles transferred into the conversion bed tend to reduce the temperature of the latter particularly in the first region thereof, while the transfer of particles in the reverse direction tends to increase the temperature of at least the region of the desulphurization bed to which the treated particles are transferred. Since an excessively high temperature tends to reduce the efficiency of fuel desulphurization, it is preferred to cool the particles entering the fuel desulphurization bed by means of a heat sink material, which may be cooled flue gas (e.g. obtained by burning and cooling some of the gasified fuel) and/or water and/or steam and/or fresh particles (e.g. as $CaSO_3$).

In order to ensure that sulphur fixed in the particles as CaS during the desulphurization step is removed at substantially the same rate during the conversion step, it is preferred to circulate particles between the sulphur-fixing bed and the conversion bed at a rate which is related to the sulphur content of the particles transferred from the fixing bed to the conversion bed. The sulphur content will determine the temperature in the conversion bed (since the conversion is exothermic overall), and because the temperature in the conversion bed will vary from relatively cool (e.g. 860°C) at the entrance to the first region, to relatively hotter (e.g. 1090°C) between the first and second regions, and relatively cooler (e.g. 1060°C) in the second region, the rate of circulation of particles is preferably determined by the temperature of the hotter or hottest parts of the conversion bed. Since the location of the hotter and hottest parts may change with the concentration of sulphur (as sulphur compounds), a preferred means for regulating the circulation is to provide in the conversion bed a number of temperature sensors (e.g. thermocouples), preferably arranged in a linear array, and to arrange matters so that the temperature sensor registering the highest temperature controls the particle transfer rate.

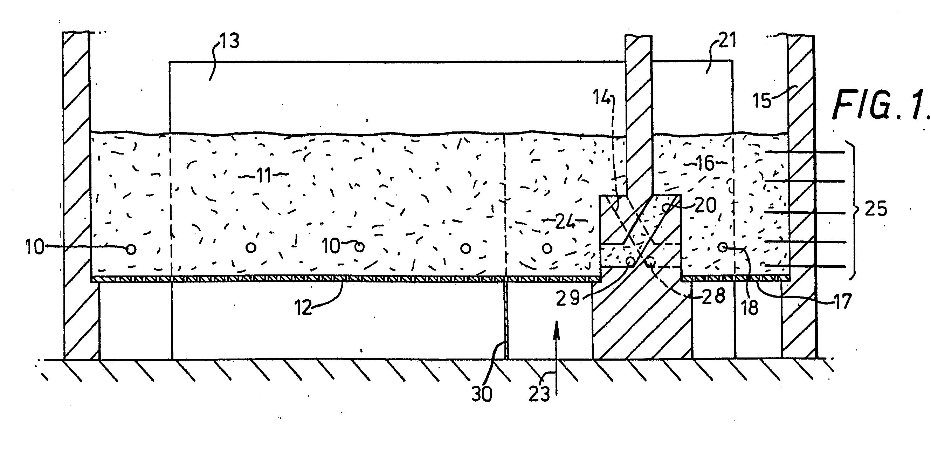

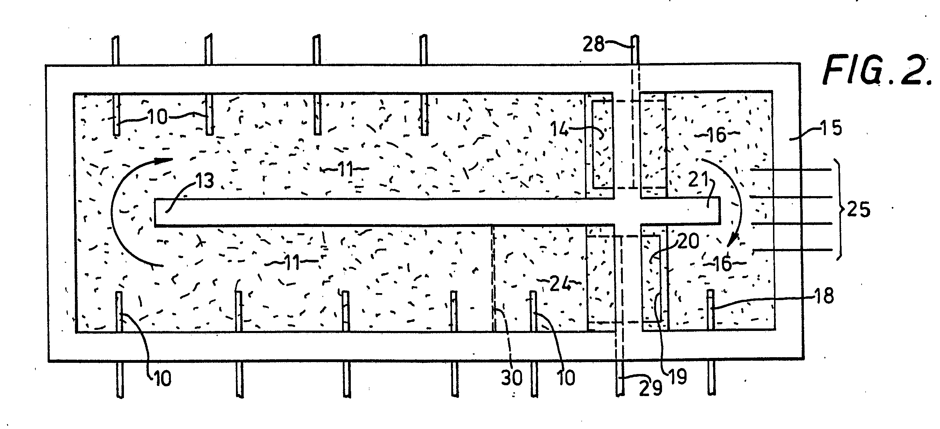

In the accompanying drawings, Figure 1 is a diagrammatic side view of a non-limitative example of equipment embodying the invention and Figure 2 is a diagrammatic plan view of same.

Sulphur-containing fuel oil is injected through injectors 10 into a fuel gasification bed 11 comprising particles of CaO. The particles are fluidized by air upwardly passed into the bed from a distributor 12 and the fuel is converted to fuel gas at a bed temperature of about 860°C. As will be seen from Figure 2, the bed space 11 is divided by a septum 12 and particles travel around the bed space in a clockwise (as shown in Figure 2) direction, as indicated by the arrows, from an entry end to an exit end. At the exit end, particles pass into a downsloping downcomer 14 into the bottom region of a regenerator 15 containing a conversion bed 16 of particles which are fluidized by air which is upwardly passed from a distributor 17. In the bed 16, the CaS of the particles is converted to CaO with the liberation of $SO_2$ and the generation of some $CaSO_4$. The concentration of $CaSO_4$ and the particle temperature is reduced by injecting hydrocarbon oil into bed 16 from an injector 18 adjacent to an exit port 19 forming the entrance to a down-sloping downcomer 21 (Figure 1) which passes the particles to the entry end of bed 11. A septum 21 extends between the inlet and outlet of the bed 16 to promote clockwise particle flow (as shown in Figure 2). Transfer of particles through the downcomers 14 and 21 is promoted by pulses of gas (e.g. nitrogen or air) directed into the horizontal discharge section of each downcomer from respective gas pulse conduits 28, 29. The particles are conveyed pneumatically from the downcomers into the beds by the gas pulses. The particles at the entry region 24 of the bed 11 are cooled by fluidization with cool recycled flue gas (indicated by arrow 23 in Figure 1) obtained from the combustion and cooling of the fuel gas produced in the bed 11 and/or by the addition of cool heat absorbing particles, such as cold calcinable particles to region 24 (Figure 2) e.g. from an overhead hopper and feed regulating device (not shown). It is preferred to separate the main air flow into the bed 11 from the recycled flue gas (which may contain admixed air) by means of a vertical partition 30 in the space beneath the distributor 12. The rate of transfer of particles between the beds is regulated by the temperature of the hotter or hottest thermocouple(s) of a bank (25) of thermocouples (Figure 2) in the bed 16, the thermocouples acting via amplifiers on a bed transfer control system comprising the conduits 28, 29. Further temperature control in the bed 11 may be obtained by diluting the fluidizing air with an inert material such as recycled flue gas (obtained by burning the fuel gas) and/or steam and/or water. The mean temperature in the bed 16 is about 1065°C or 1075°C.

It is desirable to supply air to the conversion bed 16 at a rate which is related to the rate at which calcium sulfide enters the conversion bed so that a fall in the calcium sulfide rate is matched by a related reduction in the air rate and the consumption of power for circulating the air through the bed 16. To this end, it is preferred to monitor the air rate and also the rate of $SO_2$ production in the gases leaving the top of the bed 16. A fall in the latter is indicative of a reduced rate of CaS input to the conversion bed, and a signal indicative of the reduced $SO_2$ production rate is employed to regulate the air supply rate. The equipment for performing the foregoing air and CaS matching operations is conventional and will be within the knowledge of those skilled in the art.

## Claims

1. A method of converting calcium sulphide contained in particles to calcium oxide, comprising passing the particles into a conversion bed (16) operated at an elevated temperature, the conversion bed being fluidized by passing a free oxygen-containing gas into the bottom thereof (via 17), and in which the particles are passed via an entrance (e.g. via 14) into a first region of the conversion bed adjoining the said entrance and wherein at least some of the CaS is converted to CaO with the liberation of at least one sulphur oxide, recovering particles of increased CaO content via an exit (19) receiving particles from a second region of the conversion bed (16) adjoining the said exit, particles passing from the said entrance (via 14) to the said exit (19) passing along a path which extends through both the first and second regions thereof, characterized in that the said entrance and the said exit are separated in a horizontal sense and in that a reducing agent is passed (via 18) into the second region of the conversion bed to remove by chemical reaction any excess oxygen which might otherwise oxidize any unconverted CaS to $CaSO_4$.

2. A method according to claim 1 characterized in that the said entrance (via 14) is so arranged that particles enter a lower part of the first region and the exit (19) is so arranged that particles leave an upper part of the second region.

3. A method according to claim 1 or claim 2 characterized in that the said entrance and exit (19) are substantially at opposite ends of the said path through the conversion bed (16).

4. A method according to claim 3 characterized in that the entrance (via 14) and exit (19) are on the same side of the conversion bed (16) but separated from each other by a vertical baffle (21) which extends from a position between the entrance (via 14) and the exit (19) partly towards the opposite side of the bed (16) so that particles passing from the entrance to the exit circulate along a path which is substantially U-shaped as viewed from above the conversion bed (16).

5. A method according to any one of claims 1 to 4 characterized in that the reducing agent is passed (via 18) into the second region in an amount such that the oxygen of the oxygen-containing gas passing into the second region will provide about 55% of the requirement for complete oxidation of the reducing agent.

6. A method according to any one of claims 1 to 5 characterized in that at least part of the conversion bed (16) is operated at a temperature in the range of from 1050°C to 1090°C.

7. A method according to any one of claims 1 to 6 characterized in that particles of increased CaO content recovered via the exit (19, 20) of the conversion bed (16) are circulated to a first region (24) of a fluidized fuel gasification bed (11) operated at a fuel gasification temperature, a free oxygen-containing gas being passed into the bottom (via 12) of the gasification bed (11) and a sulphur-containing fuel being passed (via 10) into the gasification bed (11), the relative amounts of fuel and free oxygen being such that the sulphur-containing fuel is partly combusted in the gasification bed (11) in contact with CaO-containing particles recovered from the conversion bed (16) to produce a substantially sulphur-free gasified fuel, sulphur from the sulphur-containing fuel being fixed as CaS in the particles by chemical reaction with CaO thereof, particles of increased CaS content being circulated (via 14) from a second region of the fuel gasification bed (11) into the said conversion bed (16).

8. A method according to claim 7 characterized by comprising monitoring temperatures (using 25) within the conversion bed (16) and regulating the rate of circulation of particles to the fuel gasification bed (11) in accordance with the higher or highest temperatures monitored (by 25) in the conversion bed (16).

9. A method according to claim 7 or claim 8 characterized in that particles recovered via the exit (19, 20) from the conversion bed (16) are cooled on entering the first region (24) of the fuel gasification bed (11).

## Patentansprüche

1. Verfahren zur Umwandlung von in Teilchen enthaltenem Calciumsulfid in Calciumoxid, bei dem die Teilchen in ein bei erhöhter Temperatur betriebenes Umwandlungsbett (16) geleitet werden, das durch Einleiten eines freien Sauerstoff enthaltenden Gases am Boden des Bettes (über 17) aufgewirbelt wird und in dem die Teilchen durch einen Einlaß (z.B. über 14) in einen ersten, dem Einlaß benachbarten Bereich des Umwandlungsbettes geleitet werden und zumindest ein Teil des CaS in CaO unter Freisetzung von mindestens einem Schwefeloxid umgewandelt wird, Teilchen mit erhöhtem CaO-Gehalt über einen Auslaß (19), der Teilchen aus einem zweiten, diesem Auslaß benachbarten Bereich des Umwandlungsbettes (16) aufnimmt, gesammelt werden, wobei die von dem Einlaß (über 14) zu dem Auslaß (19) strömenden Teilchen entlant einem Strömungsweg strömen, der sowohl durch den ersten als auch durch den zweiten Bereich des Umwandlungsbettes verläuft, dadurch gekennzeichnet, daß der Einlaß und der Auslaß sich im horizontalen Sinne voneinander im Abstand befinden und daß ein reduzierendes Agens (über 18) in den zweiten Bereich des Umwandlungsbettes geleitet wird, um durch chemische Reaktion jeglichen Überschuß Sauerstoff, der sonst nicht umgewandeltes CaS zu CaSO₄ oxidieren könnte, zu entfernen.

2. Verfahren nach Anspruch 1, dadurch gekennzeichnet, daß der Einlaß (über 14) so angeordnet ist, daß die Teilchen im unteren Teil des ersten Bereiches eintreten, und der Auslaß (19) so angeordnet ist, daß die Teilchen im oberen Teil des zweiten Bereiches austreten.

3. Verfahren nach Anspruch 1 oder 2, dadurch gekennzeichnet, daß sich der Einlaß und Auslaß (19) im wesentlichen an entgegengesetzten Enden des Strömungsweges durch das Umwandlungsbett (16) befinden.

4. Verfahren nach Anspruch 3, dadurch gekennzeichnet, daß sich der Einlaß (über 14) und der Auslaß (19) auf derselben Seite des Umwandlungsbettes (16) befinden, aber durch ein vertikales Leitblech (21) getrennt sind, das sich von einer Position zwischen dem Einlaß (über 14) und dem Auslaß (19) in Richtung aber nicht vollständig bis zur gegenüberliegenden Seite des Bettes (16) erstreckt, so daß vom Einlaß zum Auslaß strömende Teilchen, betrachet von oberhalb des Umwandlungsbettes (16), einen im wesentlichen U-förmigen Strömungsweg beschreiben.

5. Verfahren nach jedem der Ansprüche 1 bis 4, dadurch gekennzeichnet, daß das reduzierende Agens in einer solchen Menge (über 18) in den zweiten Bereich geleitet wird, daß der Sauerstoff des in den zweiten Bereich eintretenden, Sauerstoff enthaltenden Gases etwa 55% des für die vollständige Oxidation des reduzierenden Agens erforderlichen Sauerstoffs liefert.

6. Verfahren nach jedem der Ansprüche 1 bis 5, dadurch gekennzeichnet, daß zumindest ein Teil des Umwandlungsbettes (16) bei einer Temperatur im Bereich von 1050 bis 1090°C betrieben wird.

7. Verfahren nach jedem der Ansprüche 1 bis 6, dadurch gekennzeichnet, daß die Teilchen mit erhöhtem CaO-Gehalt, die über den Auslaß (19, 20) aus dem Umwandlungsbett (16) entnommen werden, in einen ersten Bereich (24) eines Brennstoffvergasungs-Wirbelbettes (11) geleitet werden, das bei Brennstoffvergasungstemperatur betrieben wird, wobei ein freien Sauerstoff enthaltendes Gas am Boden (über 12) des Vergasungsbettes (11) und ein Schwefel enthaltender Brennstoff (über 10) in das Vergasungsbett (11) geleitet werden, die relativen Mengen an Brennstoff und freiem Sauerstoff so sind, daß der Schwefel enthaltende Brennstoff im Vergasungsbett (11) im Kontakt mit den CaO enthaltenden Teilchen, die aus dem Umwandlungsbett (16) entnommen worden sind, teilweise verbrennt, so daß ein im wesentlichen schwefelfreier vergaster Brennstoff erzeugt wird, wobei der Schwefel aus dem Schwefel enthaltenden Brennstoff als CaS in den Teilchen durch chemische Reaktion mit CaO fixiert wird, und Teilchen mit erhöhtem CaS-Gehalt (über 14) aus einem zweiten Bereich des Brennstoff-Vergasungsbettes (11) in das Umwandlungsbett (16) geleitet werden.

8. Verfahren nach Anspruch 7, dadurch gekennzeichnet, daß die Temperaturen (unter Verwendung von 25) in dem Umwandlungsbett (16) überwacht werden und die Strömung von Teilchen in das Brennstoff-Vergasungsbett (11) in Abhängigkeit von den höheren oder höchsten, im Umwandlungsbett (16) aufgezeichneten (unter Verwendung von 25) Temperaturen gesteuert wird.

9. Verfahren nach Anspruch 7 oder 8, dadurch gekennzeichnet, daß die über den Auslaß (19, 20) aus dem Umwandlungsbett (16) entnommenen Teilchen beim Eintritt in den ersten Bereich (24) des Brennstoff-Vergasungsbettes (11) gekühlt werden.

**Revendications**

1. Procédé de conversion en oxyde de calcium du sulfure de calcium contenu dans des particules, consistant à faire passer les particules dans un lit de conversion (16) fonctionnant à une température élevée, le lit de conversion étant fluidisé par balayage par un gaz contenant de l'oxygène libre dans le fond du lit (par 17) et dans lequel les particules pénètrent par une entrée (par exemple par 14) dans une première zone du lit de conversion contiguë à ladite entrée et dans lequel au moins une partie du CaS est convertie en CaO en libérant au mois un oxyde de soufre, à récupérer les particules à teneur accrue en CaO par une sortie (19) recevant les particules d'une seconde zone du lit de conversion (16) contiguë à ladite sortie, les particules allant de ladite entrée (par 14) à ladite sortie (19) en passant le long d'une trajectoire s'étendant de la première à la seconde zone dans le lit, lequel procédé est caractérisé en ce que ladite entrée et ladite sortie sont séparées horizontalement et en ce qu'un agent réducteur est introduit (par 18) dans la seconde zone du lit de convsersion pour éliminer par réaction chimique tout excès d'oxygène qui pourrait autrement oxyder le CaS non converti en CaSO₄.

2. Procédé selon la revendication 1, caractérisé en ce que ladite entrée (par 14) est agencée de telle sorte que les particules pénètrent dans une partie inférieure de la première zone et la sortie (19) est agencée de telle sorte que les particules quittent la seconde zone par une partie supérieure de cette dernière.

3. Procédé selon l'une des revendications 1 ou 2, caractérisé en ce que ladite entrée et ladite sortie (19) sont situées pratiquement à des extrémités opposées de ladite trajectoire dans le lit de conversion (16).

4. Procédé selon la revendication 3, caractérisé en ce que l'entrée (par 14) et la sortie (19) sont situées du même côté du lit de conversion (16), mais séparées l'une de l'autre par une chicane verticale (21) qui s'étend à partir d'une position entre l'entrée (par 14) et la sortie (19) partiellement vers le côté opposé du lit (16) de sorte que les particulates allant de l'entrée à la sortie circulent le long d'une trajectoire qui a pratiquement une forme en U, vue de dessus du lit de conversion (16).

5. Procédé selon l'une quelconque des revendications 1 à 4, caractérisé en ce que l'agent réducteur est introduit (par 18) dans la seconde zone en une quantité telle que l'oxygène du gaz contenant de l'oxygène traversant la seconde zone représente environ 55% de la quantité nécessaire pour une oxydation totale de l'agent réducteur.

6. Procédé selon l'une quelconque des revendications 1 à 5, caractérisé en ce qu'au moins une partie du lit de conversion (16) fonctionne à une température de l'ordre de 1050 à 1090°C.

7. Procédé selon l'une quelconque des revendications 1 à 6, caractérisé en ce que les particules à teneur accrue en CaO récupérées à la sortie (19, 20) du lit de conversion (16) circulent dans une première zone (24) d'un lit fluidisé de gazéification d'un combustible (11) fonctionnant à une température de gazéification d'un combustible, un gaz contenant de l'oxygène libre balayant le fond (par 12) du lit de gazéification (11) et un combustible contenant du soufre pénétrant (par 10) dans le lit de gazéification (11), les quantités relatives de combustible et d'oxygène libre étant telles que le combustible contenant du soufre est partiellement brûlé dans le lit de gazéification (11) au contact des particules contenant du CaO récupérées à partir du lit de conversion (16) pour produire un combustible gazéifié pratiquement exempt de soufre, le soufre du combustible contenant du soufre étant fixé sous forme de CaS dans les particules par une réaction chimique avec le CaO des particules, les particules à teneur accrue en CaS circulant (par 14) à partir d'une seconde zone du lit de gazéification du combustible (11) dans ledit lit de conversion (16).

8. Procédé selon la revendication 7, caractérisé en ce qu'il comprend un réglage des températures (par 25) dans le lit deconversion (16) et un réglage de la vitesses de circulation des particules vers le lit de gazéification de combustible (11) en rapport avec les températures très élevées ou les plus élevées établies (par 25) dans le lit de conversion (16).

9. Procédé selon l'une des revendications 7 ou 8, caractérisé en ce que les particules récupérées à la sortie (19, 20) du lit de conversion (16) sont refroidies en entrant dans la première zone (24) du lit de gazéification de combustible (11).

FIG. 1.

**FIG. 2.**

15, 25, 16, 16, 18, 21, 20, 19, 29, 28, 14, 24, 10, 30, 11, 11, 13, 10, 10